# EUROPEAN PATENT SPECIFICATION

(11) **EP 1 587 026 B1**
(45) Date of publication and mention of the grant of the patent: **18.06.2008**
(21) Application number: 04101565.2
(22) Date of filing: 15.04.2004
(51) Int. Cl.: G06F 3/00, G06F 3/033

(54) **System and method for providing dynamic tactile feedback on hand-held electronic devices**
System und Methode zur dynamisch taktilen Rückmeldung in tragbaren elektronischen Geräten
Système et méthode permettant d'obtenir une rétroaction tactile dynamique dans des dispositifs électroniques portatifs

(43) Date of publication of application: 19.10.2005
(60) Divisional application: 08154753.1
(73) Proprietor: Research In Motion Limited, Waterloo, Ontario N2L 3W8 (CA)
(72) Inventor: Ladouceur, Norman, Ontario N2T 1A2 (CA); Griffin, Jason, Ontario, N2T 2J5 (CA)
(74) Representative: Rickard, David John

(56) References cited:
- EP-A- 1 378 856
- WO-A-99/49443
- WO-A-03/046822
- US-B1- 6 300 936

## Description

This invention relates to the field of hand-held electronic devices. Specifically this invention relates to providing dynamic tactile-feedback on hand-held electronic devices.

Many hand-held electronic devices provide input means allowing the user to manipulate data on the hand-held electronic device, including for example scrollwheels and keyboards. Scrollwheels are also commonly referred to as thumbwheels or roller wheels. Current scrollwheels provide limited tactile response to the user. Typical feedback to the user includes "bumps" or detents activated when the scrollwheel is rotated a predetermined distance, and "clicks" which are felt when the user pushes the scrollwheel in one or more direction, without rolling it. These feedback mechanisms typically correspond to moving the cursor on a display screen for "bumps" and selection of an option for "clicks." Current scrollwheel functionality on handheld electronic devices, for example, allow users to scroll in both horizontal and vertical screen directions by rolling a scrollwheel, and to select screen icons by pushing the scrollwheel in towards the handheld electronic device. When rotated, the scrollwheel provides a feeling to the user of moving through "bumps" (detents).

WO99/49443 discloses a force feedback system by which the user may make input using either rotation or depression of the scroll wheel. The wheel rotates in its place when the user's finger frictionally displace it in an rotational direction, such that the degree of rotation can be, for example, automatically translated into the scrolling of a document. Depression of the wheel in a lateral direction similar to the click of a mouse button causes the release of a signal. US6300936 discloses a force feedback system including a host computer and a force feedback interface device. EP 1378856 relates to providing a user with tactile feedback on a mobile device, in connection with a pointing device on the mobile device. The pointing device is a track ball. Typically, the movement of track ball is smooth. In EP 1378856 "clicks" and vibration are applied to the track ball using a tactile sensation device.

These feedback mechanisms, however, are limited in scope and are preset by the hardware within the device thereby provide inadequate information to the users. There is a need in the art to provide an improved feedback system.

### GENERAL

In accordance with the teachings disclosed herein, systems and methods for providing dynamic tactile feedback to a user of a handheld electronic device are disclosed. In one aspect of the invention, a dynamic feedback system for use with a handheld electronic device is provided, the dynamic feedback system comprising: a scrollwheel for providing input to the handheld electronic device; a dynamic feedback module connected to the scrollwheel for providing a plurality of types of feedback to a user of the handheld electronic device, the dynamic feedback module comprising: means for providing feedback in a direction of rotational displacement of the scrollwheel, and means for providing feedback in a direction of linear displacement of the scrollwheel; a software module for selecting a type of feedback from a plurality of feedback types, wherein each feedback type comprises at least one of a rotational feedback or a linear displacement feedback, and activating the associated type of feedback provided by the dynamic feedback module.

In another aspect of the invention, a method for providing feedback on a handheld electronic device having a scrollwheel and having a dynamic feedback module connected to the scrollwheel for providing a plurality of types of feedback to a user of the handheld electronic device, the dynamic feedback module comprising means for controlling resistance to rotational and lateral motion of the scrollwheel, the method comprising the steps of: providing a user initiated input to the handheld electronic device through the scrollwheel; analyzing data associated with the user-initiated input; deciding if a feedback response is required; and if a feedback response is required, selecting a feedback type wherein the feedback type comprises a rotational feedback or a linear displacement feedback of the scrollwheel.

As another example, a method for providing feedback may comprise the steps of providing a user initiated input to the handheld electronic device through the scrollwheel, analysing data associated with the user initiated input, deciding if a feedback response is required, and if a feedback response is required, initiating an appropriate feedback mode.

### BRIEF DESCRIPTION OF THE DRAWINGS

The present system will be further understood from the following detailed description, with reference to the drawings in which similar reference numerals are used in different figures to denote similar elements.
Fig. 1 is a diagram of an exemplary handheld electronic device in which a dynamic tactile feedback system can be implemented.
Fig. 2 is a representative diagram showing various types of feedback.
Fig. 3 is a diagram showing a screen of a handheld electronic device and illustrating different types of dynamic feedback.
Fig. 4 is a diagram of a screen showing a messaging application.
Fig. 5 is a diagram of a data page having different objects that trigger different types of feedback.
Fig. 6 is a block diagram showing a method for providing dynamic feedback to a handheld electronic device user.
Fig. 7 is a diagram showing the use of clutch plates to provide resistance to rotation in a scrollwheel.
Fig. 8 is a diagram showing the use of an electromagnetic motor for providing rolling resistance in a scrollwheel.
Fig. 9 is a diagram showing the use of a cam mechanism for providing lateral motion in scrollwheel.

### DETAILED DESCRIPTION

As handheld device users are forced to process more and more data and applications, the use of a limited number of preset feedback responses is not adequate. The feedback responses are constant, whether a particular set of data or a particular application is relevant, or irrelevant to the user. In one example, a user scrolling through a list of unread messages will currently feel the same feedback response whether a message is of normal or high importance.

Providing the user with different feedback responses for different types or priority levels of data, allows the user to easily select relevant data from a list including both relevant and irrelevant data. Additionally, different users may desire different types or levels of feedback associated with different applications, events or data sets.

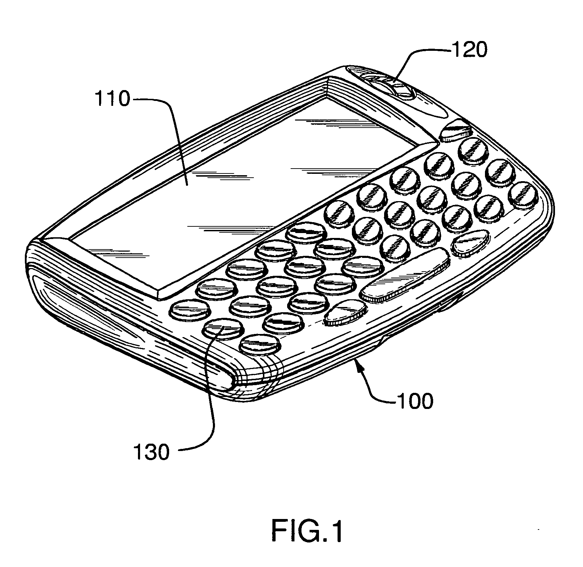

Turning now to the drawing figures, Fig. 1 is a diagram showing an exemplary handheld electronic device 100 in which a dynamic tactile feedback system can be implemented. The handheld electronic device 100 comprises a display 110 for displaying user data and a scrollwheel 120 capable of providing dynamic feedback to a user. This handheld electronic device also includes an auxiliary input device, shown here as a keyboard 130. It will be appreciated by those skilled in the art that there are a variety of possible form factors and input interfaces for the handheld electronic device 100. For example, the auxiliary input device could be a touchscreen interface or some other input interface.

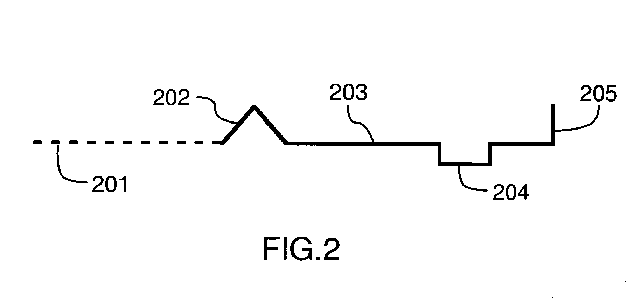

Fig. 2 is a representative diagram showing various types of feedback that may be returned to the user based on the type of data, application or event that is selected by the user on the handheld electronic device 100. Dotted line 201 represents a frictional resistance, which works against the users movement of the scrollwheel. This resistance could be accomplished by using an electromechanical device, such as a motor, to resist the motion of the scrollwheel 120. This resistance could be used to represent any number of data types, including but not limited to data on a web page or the text in an email. "Bump" 202 represents a physical movement of the scrollwheel towards or away from the user which would push the scrollwheel back against the user's thumb, but would not stop the scrollwheel motion. This motion could be accomplished by using an actuator or an electromechanical device. The "bump" could be used to represent a change in the data, for example a paragraph change on a page of text or in an email or a location where optional data needs to be entered into a data form. Flat line 203 is a "free slide" where the scrollwheel provides no resistance to the user's actions. The "free slide" could be accomplished by allowing the scrollwheel to roll smoothly. The "free slide" could be used to represent data that does not need close inspection, for example a blank section in a text page or data that the user has already processed. "Hole" 204 represents a temporary physical stopping of the scrollwheel accompanied by movement towards or away from the user. The "hole" could be accomplished using an actuator or electromechanical device to move the scrollwheel towards or away from the user accompanied by a motor or electromechanical braking system to prevent the scrollwheel from moving in a particular direction, while still allowing the scrollwheel to move in the opposite direction. The "hole" could be used to represent any number of important types of data including an important line in an email or text page or the location of a mandatory data item that must be entered on a data form. Once the text has been processed or the data entered the scrollwheel would be released by the software, or in the alternative the scrollwheel could simply be rolled out of the "hole," the user then being able to continue moving the scrollwheel. Vertical line 205 represents a complete physical stopping of the scrollwheel. This could be accomplished by using a motor or electromechanical braking system to hold the scrollwheel in place. This complete stopping of the scrollwheel could be used to indicate an end to the data being processed, for example the user having reached the end of a text page or email.

As further examples of the system, on-screen situations are described below, where the cursor travel relative to its screen position would result in various types of feedback being provided to the user. The type of feedback provided could be subject to the software programming of the position of the cursor. The type of feedback provided to the user would differ for different cursor positions on the screen. Some of the types of feedback are bumps, holes, plateaus, free slides, resistant surfaces, and abrupt stops as described above.

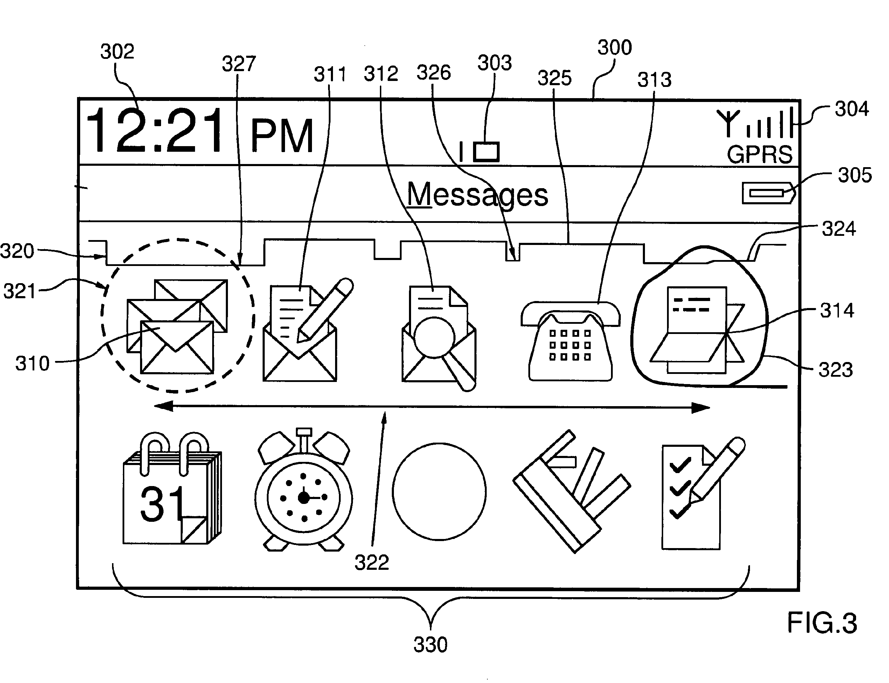

Fig. 3 is a diagram showing a screen of a handheld electronic device and illustrating different types of dynamic feedback. The display screen 300 shows a variety of objects, including the current time 302, the number of unread messages 303, wireless signal strength 304 and battery level 305. The display screen also shows icons representing various applications, including an email application icon 310, a compose message application icon 311, a search messages icon 312, a phone application icon 313 and an address book application icon 314. Various other icons 330 for additional applications are also shown.

The first cursor position 323 indicates that the address book application icon 314 is the current active icon.

In one embodiment of the invention, when the user wishes to move the cursor from its first cursor position 323 to a second cursor position 321 associated with the email application icon 310 in order to select the email application icon 310 for example, the user will roll the scrollwheel in a particular direction as dictated by the device software. Rolling the scrollwheel will cause the cursor to move from the first cursor position 323, following path 322 to the second cursor position 321. As this takes place, various types of feedback are provided to the user depending on triggers or messages from application software on the device. The feedback line 320 shown in Fig. 3 is a graphical representation of several types of triggers that can be associated with the icons displayed on the screen 300. In the first cursor position 323, the address book application icon 314 is associated with a hole trigger 324. In a hole trigger 324, the scrollwheel would require a change in rotational force to move the cursor from the first current position 323 to the second cursor position 321. The user would experience a programmed feedback as the cursor moves along from icon to icon along the path 322 until reaching the second cursor position 321.

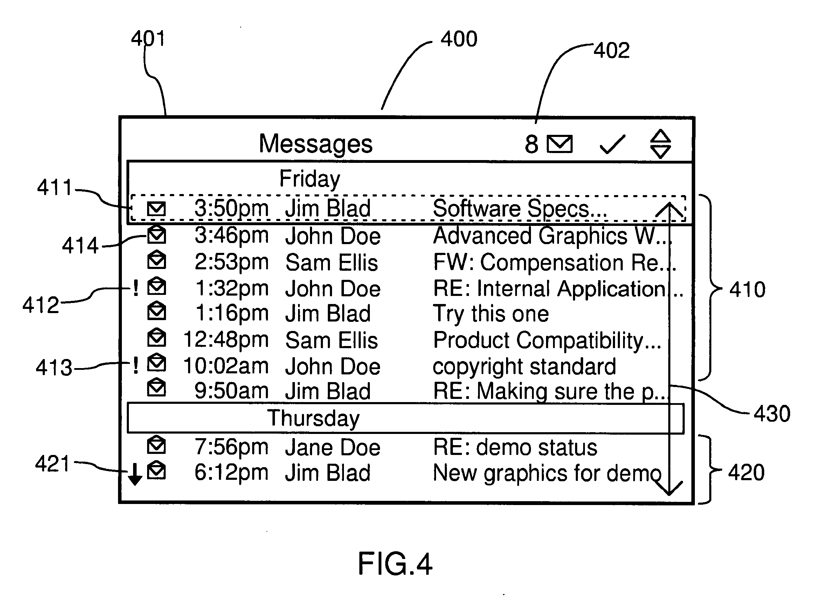

Fig. 4 is a diagram of a screen 400 showing a messaging application. Screen 400 shows a number of objects including the number of unread messages 402 and listing messages received on Friday 410, including urgent messages 412 and 413, and messages received on Thursday 420, including low priority message 421. The cursor 411 is currently associated with the most recently received message. By rolling the scrollwheel, the position of the cursor 411 can be moved up and down the list along the path 430. As the cursor 411 highlights a particular message, for example urgent message 412, a particular type of feedback is activated, for example the scrollwheel could move laterally or "bump" when an urgent message 412 or 413 is highlighted. In a similar manner, when the cursor 411 highlights a regular priority message 414, a different type of feedback may be activated, such as a smaller "bump" or no bump at all. Similarly, when the cursor 411 highlights the low priority message 421, a third different type of feedback may be activated.

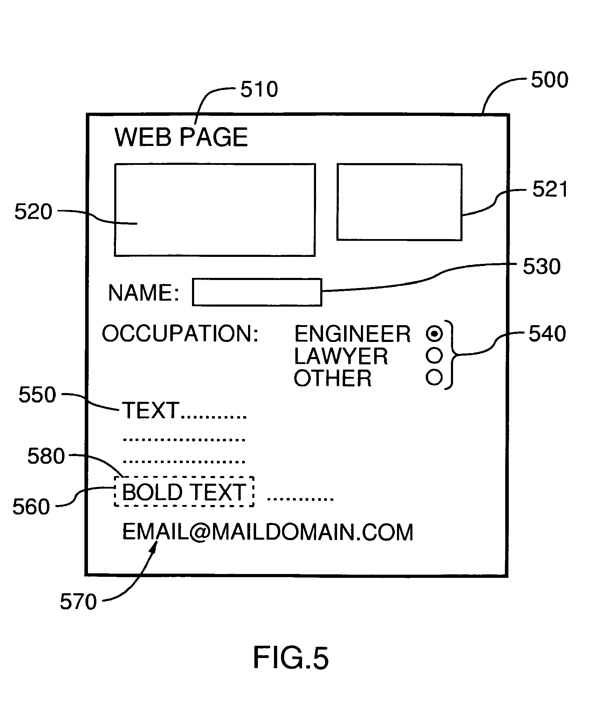

Fig. 5 diagram of a data page 500 having different objects that trigger different types of feedback. The data page 500 comprises a number of objects typically found in data pages such as web pages, including a title 510, an image 520, an image linking to a web page 521, a text field 530, radio buttons 540, plain text 550, bold text 560 and an email address 570. In this example, as the cursor 580 is moved about the page using a scrollwheel, various types of feedback are returned to the user. As an example, starting at the title 510, a "plateau," or constant resistance to scrollwheel rotation, may be sent to the scrollwheel, laterally moving the scrollwheel and maintaining its outward position, indicating a starting position. As the cursor 580 is moved through the regular image 520, no feedback may be given, or a "free slide" may be allowed, where the scrollwheel has no frictional resistance. When the cursor highlights the image with a link to a website 521, a type of feedback such as a resistance to rotation may be sent to the user to indicate the presence of the link. As the cursor 580 highlights the text field 530, a "hole" type of feedback may be sent through the scrollwheel, wherein the user experiences the feeling of the scrollwheel being moved laterally down, indicating to the user that they are able to enter data. While the cursor passes through the radio buttons 540, the user may be sent a series of "bumps" or detents as each of the possible options are highlighted. Scrolling through the regular text 550, the user may experience no feedback, or perhaps slight rolling resistance. When the cursor 580 encounters the bold text 560, however, the scrollwheel rolling resistance would increase, indicating an area of particular interest to the user. Finally, upon reaching the email address 570 at the end of the page, the scrollwheel may be sent a "bump" indicating a link to an email address. The scrollwheel may then placed in "full-stop" mode, where the rolling resistance is increased to a maximum value, indicating to the user that the end of the data page has been reached. It will be appreciated by someone skilled in the art that the various types of feedback associated with the assorted objects on the data page can be selected based on a number of criteria. They may be selected based on user preferences, based on feedback data embedded in the data page, based on a software application analyzing the page and determining where a particular type of feedback is appropriate, or based on some other criteria.

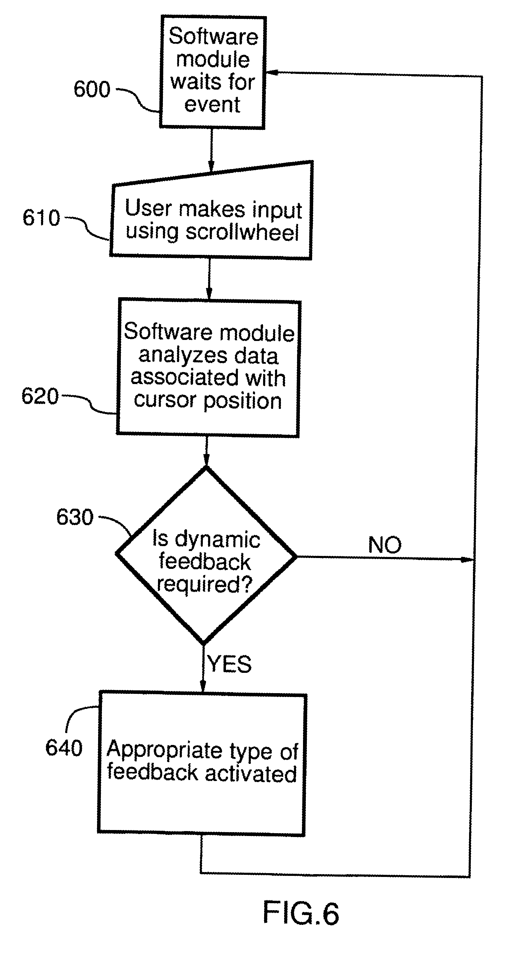

Fig. 6 is a block diagram showing a method for providing dynamic feedback to a handheld electronic device user. In step 600, a software module on the handheld electronic device is in a standby state waiting for user input. In step 610, the user initiates an input signal to the handheld electronic device using the scrollwheel. This user-initiated input may include a roll of the scrollwheel, a click of the scrollwheel, or some combination of roll and click, and generally corresponds to a cursor action on the display screen. In step 620, the software module analyses data associated with the input the user just performed (often with respect to a new cursor position). In step 630, the software module determines if a dynamic feedback response is required. If a dynamic feedback response is not required, the software module simply returns to a wait state. If a dynamic feedback response is required, the appropriate type of feedback is activated in step 640, after which the software module returns to its wait state.

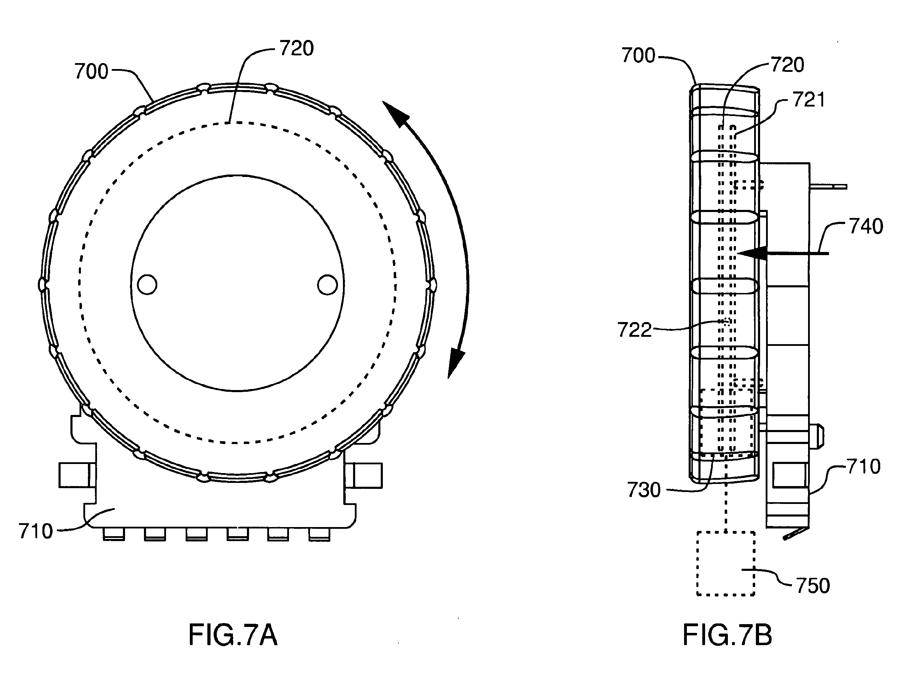

Fig. 7 shows one embodiment of the invention for providing frictional resistance. In this embodiment, a scrollwheel 700 is connected to and rotates about a body assembly 710, and the scrollwheel 700 comprises a first mechanical clutch plate 720 which rotates with the scrollwheel 700. The body assembly 710 comprises a second mechanical clutch plate 721 that is rotationally fixed with respect to the body assembly but capable of engaging the first clutch plate 720. The mechanical clutch plates 720 and 721 are aligned so they are substantially coplanar, and are separated by a small gap 722. When a force 740 is applied normal to the surfaces of the clutch plates 720 and 721 of sufficient magnitude to cause the first clutch plate 720 to engage the second clutch plate 721, the resulting friction force will oppose rotation of the scrollwheel 700. It will be appreciated by one skilled in the art that the resulting frictional force is approximately proportional to the normal force 740 multiplied by the frictional coefficient "µ", and that varying the normal force 740 will cause the frictional force opposing the rotation of the scrollwheel 700 to vary accordingly. To generate the required normal force 740, various means may be used, including an electromagnetic solenoid 730 connected to an electronic brake controller 750 or some other electrical or mechanical means as will be evident to one skilled in the art.

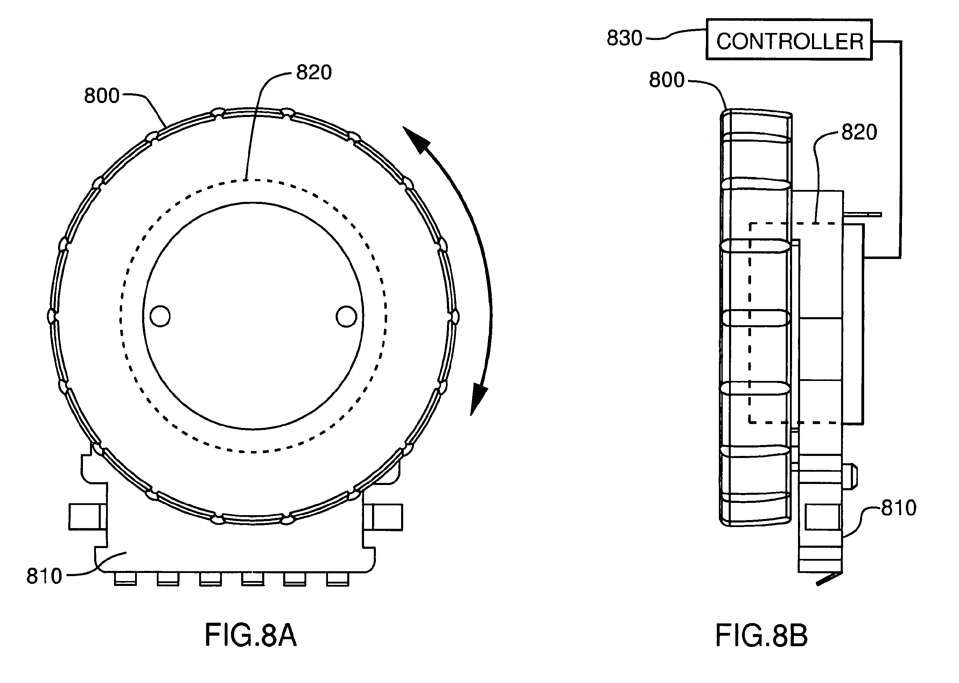

Fig. 8 is a diagram showing the use of an electromagnetic motor for providing rolling resistance in a scrollwheel. A scrollwheel 800, which is connected to and rotates about a body assembly 810, also comprises an electromagnetic motor 820, which is controlled by a motor controller 830. By adjusting the properties of the electromagnetic motor 820, the motor controller 830 can increase or reduce the required scrollwheel 800 rolling resistance.

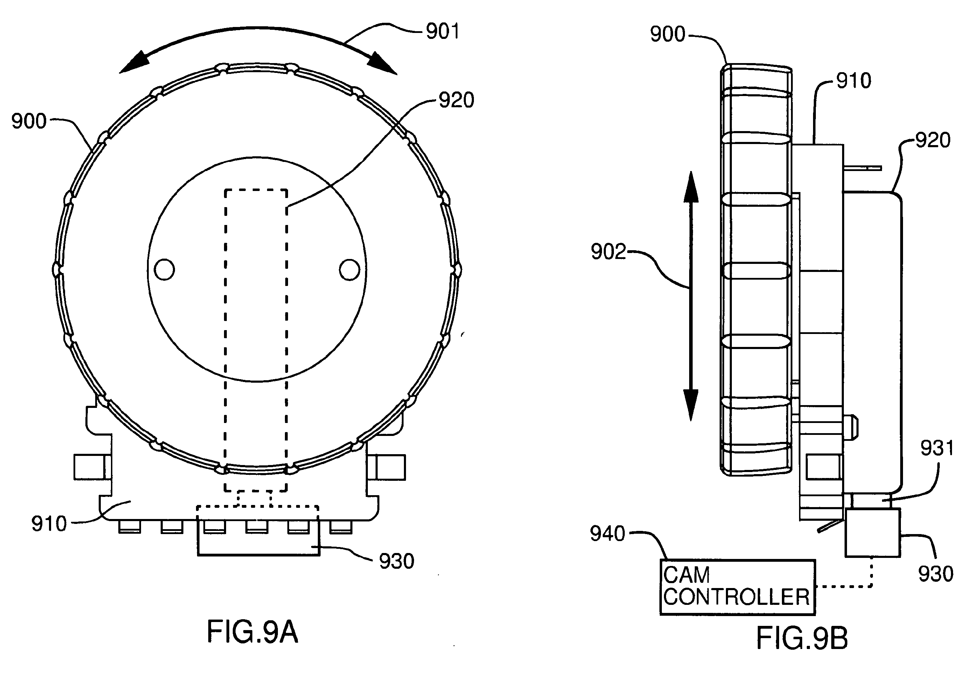

Fig. 9 is a diagram showing the use of a cam mechanism for providing lateral motion in scrollwheel . Lateral scrollwheel motion is generally defined as motion along a plane normal to the axis of the scrollwheel. Pushing the edge of the scrollwheel causing it to move in towards the body of a handheld electronic device, without causing rotation to the scrollwheel, for example, is one type of lateral movement. In Fig. 9, a scrollwheel 900 is connected to and rotates 901 about a body assembly 910. In this embodiment, the body assembly 910 is connected to or may even be a part of a slide assembly 920. The slide assembly 920 allows the entirety of the scrollwheel 900 and body assembly 910 to move freely laterally 902 with respect to the handheld electronic device. To control this lateral movement 902, the slide assembly 920 is connected to a control mechanism such as cam mechanism 930 with a cam 931, or alternatively a lever mechanism (not shown), a solenoid mechanism (not shown) or some other actuating means. The cam mechanism 930 is connected to a cam controller 940 responsible for controlling the lateral position of the scrollwheel. As the cam 931 connected to the cam mechanism 930 and the slide assembly 920 moves, the scrollwheel 900 and body assembly 910 move laterally 902 correspondingly.

It should be mentioned that although the present invention has been described in considerable detail with reference to certain preferred embodiments, other embodiments are possible. Therefore, the spirit and scope of the appended claims should not be limited to the description of the preferred embodiment contained herein.

## Claims

1. A dynamic feedback system for use with a handheld electronic device (100), the dynamic feedback system comprising:
a scrollwheel(120) for providing input to the handheld electronic device;
a dynamic feedback module connected to the scrollwheel for providing a plurality of types of feedback to a user of the handheld electronic device, the dynamic feedback module comprising:
means (720, 820) for providing feedback in a direction of rotational displacement of the scrollwheel, and
means (930) for providing feedback in a direction of linear displacement of the scrollwheel;
a software module for selecting a type of feedback from a plurality of feedback types, wherein each feedback type comprises at least one of a rotational feedback or a linear displacement feedback, and
activating the associated type of feedback provided by the dynamic feedback module.

2. The dynamic feedback system of claim 1 wherein each feedback type further comprises a predetermined pattern of feedback strength, whereby the user experiences a predetermined pattern of resistance to the user initiated input.

3. The dynamic feedback system of claims 1 or 2 wherein the software module selects the feedback type based on feedback data associated with a data page on the handheld electronic device.

4. The dynamic feedback system of Claims 1 or 2 wherein the software module selects the feedback type based on a set of predetermined criteria.

5. The dynamic feedback system of Claim 4 wherein the predetermined criteria are based on preferences selected by the user.

6. The dynamic feedback system of Claim 4 wherein the predetermined criteria are established in a software algorithm.

7. The dynamic feedback system of Claim 6 wherein the predetermined criteria are based on a position of a cursor (411) controlled by the scrollwheel.

8. The dynamic feedback system of Claims 1 or 2 wherein the dynamic selects the feedback type in response to different priority levels of data.

9. The dynamic feedback system of Claims 1 or 2 wherein the means for resisting rotational motion of the scrollwheel comprises an electromagnetic motor (820) or at least one mechanical clutch plate (720, 721).

10. The dynamic feedback system of any of Claims 1 to 9 wherein the dynamic feedback module provides as feedback lateral motion of the scrollwheel away from the user when the user is able to enter data.

11. The dynamic feedback system of Claims 1 or 2 wherein the means for providing lateral motion of the scrollwheel comprises a cam mechanism (930) or an electromechanical switch.

12. A handheld electronic device (100) comprising a dynamic feedback system of any of Claims 1 to 11.

13. The handheld device of Claim 12 further comprising a keyboard (130) and/or a touchscreen.

14. A method for providing feedback on a handheld electronic device (100) having a scrollwheel (120) and having a dynamic feedback module connected to the scrollwheel for providing a plurality of types of feedback to a user of the handheld electronic device, the dynamic feedback module comprising means (930) for controlling resistance to rotational and lateral motion of the scrollwheel, the method comprising the steps of:
providing a user initiated input to the handheld electronic device through the scrollwheel;
analyzing data associated with the user-initiated input;
deciding if a feedback response is required; and
if a feedback response is required, selecting a feedback type
wherein the feedback type comprises a rotational feedback or a linear displacement feedback of the scrollwheel.

15. The method of Claim 14 wherein the feedback type further comprises a predetermined pattern of feedback strength, whereby the user experiences a predetermined pattern of resistance to the user initiated input.

16. The method of Claims 14 or 15 wherein the decision to initiate a feedback response is based on a feedback trigger associated with a particular data page.

17. The method of any one of Claim 14-16 wherein the feedback type is determined based on the feedback trigger associated with a particular data.

18. The method of Claim 17 wherein the feedback type is based on a set of predetermined criteria.

19. The method of Claim 18 wherein the predetermined criteria are based on preferences selected by the user.

20. The method of Claim 19 wherein the predetermined criteria are established in a software algorithm.

21. The method of Claim 20 wherein the predetermined criteria are based on a position of a cursor (411) controlled by the scrollwheel.

22. The method of any of Claims 14 to 21 wherein the feedback mode is associated with a type of feedback.

23. The method of Claims 14 or 15 wherein the type of feedback are selected in response to different priority levels of data.

24. The method of Claims 14 or 15 wherein the lateral movement of the scrollwheel is in a direction away from the user when the user is able to enter data.

25. The method of any one of Claims 14 to 24 wherein the resistance to rotational movement of the scrollwheel is absolute, and the scrollwheel cannot rotate.

26. A machine readable medium comprising program code executable on a device of Claim 12 or Claim 13 for implementing the method of any of Claims 14 to 25.

## Patentansprüche

1. Dynamisches Rückmeldungssystem zur Verwendung mit einem tragbaren elektronischen Gerät (100), das dynamische Rückmeldungssystem umfassend:
ein Scrollrad (120) zum Bereitstellen von Eingabe an das tragbare elektronische Gerät;
ein dynamisches Rückmeldungsmodul, das mit dem Scrollrad verbunden ist, zum Bereitstellen einer Vielzahl von Rückmeldungstypen an einen Benutzer des tragbaren elektronischen Geräts, das dynamische Rückmeldungsmodul umfassend:
Mittel (720, 820) zum Bereitstellen von Rückmeldung in einer Richtung der Rotationsverlagerung des Scrollrads, und
Mittel (930) zum Bereitstellen von Rückmeldung in einer Richtung der
Linearverlagerung des Scrollrads;
ein Software-Modul zum Auswählen eines Rückmeldungstyps aus einer Vielzahl von Rückmeldungstypen, wobei jeder Rückmeldungstyp mindestens eine aus einer Rotationsrückmeldung oder einer Linearverlagerungsrückmeldung umfasst, und
Aktivieren des assoziierten Rückmeldungstyps, der durch das dynamische Rückmeldungsmodul bereitgestellt wird.

2. Dynamisches Rückmeldungssystem gemäß Anspruch 1, wobei jeder Rückmeldungstyp ferner ein vorbestimmtes Muster der Rückmeldungsstärke umfasst, wodurch der Benutzer ein vorbestimmtes Muster des Widerstands gegen die vom Benutzer initiierte Eingabe erlebt.

3. Dynamisches Rückmeldungssystem gemäß Anspruch 1 oder 2, wobei das Software-Modul den Rückmeldungstyp auf der Basis von Rückmeldungsdaten auswählt, die mit einer Datenseite auf dem tragbaren elektronischen Gerät assoziiert sind.

4. Dynamisches Rückmeldungssystem gemäß Anspruch 1 oder 2, wobei das Software-Modul den Rückmeldungstyp auf der Basis eines Sets an vorbestimmten Kriterien auswählt.

5. Dynamisches Rückmeldungssystem gemäß Anspruch 4, wobei die vorbestimmten Kriterien auf Voreinstellungen basieren, die durch den Benutzer ausgewählt wurden.

6. Dynamisches Rückmeldungssystem gemäß Anspruch 4, wobei die vorbestimmten Kriterien in einem Software-Algorithmus eingerichtet werden.

7. Dynamisches Rückmeldungssystem gemäß Anspruch 6, wobei die vorbestimmten Kriterien auf einer Position eines Cursors (411) basieren, der durch das Scrollrad gesteuert wird.

8. Dynamisches Rückmeldungssystem gemäß Anspruch 1 oder 2, wobei das dynamische System die Rückmeldung als Reaktion auf unterschiedliche Prioritätsstufen von Daten auswählt.

9. Dynamisches Rückmeldungssystem gemäß Anspruch 1 oder 2, wobei das Mittel zum Widerstehen gegen die Rotationsbewegung des Scrollrads einen elektromagnetischen Motor (820) oder mindestens eine mechanische Kupplungsscheibe (720, 721) umfasst.

10. Dynamisches Rückmeldungssystem gemäß einem der Ansprüche 1 bis 9, wobei das dynamische Rückmeldungsmodul als Rückmeldung eine Seitwärtsbewegung des Scrollrads von dem Benutzer weg bereitstellt, wenn der Benutzer zur Dateneingabe in der Lage ist.

11. Dynamisches Rückmeldungssystem gemäß Anspruch 1 oder 2, wobei die Mittel zum Bereitstellen der Seitwärtsbewegung des Scrollrads einen Nockenmechanismus (930) oder einen elektromechanischen Schalter umfassen.

12. Tragbares elektronisches Gerät (100), umfassend ein dynamisches Rückmeldungssystem gemäß einem der Ansprüche 1 bis 11.

13. Tragbares elektronisches Gerät gemäß Anspruch 12, des Weiteren umfassend eine Tastatur (130) und/oder einen Touchscreen.

14. Verfahren zum Bereitstellen von Rückmeldung auf einem tragbaren elektronischen Gerät (100), das über ein Scrollrad (120) und ein mit dem Scrollrad verbundenes dynamisches Rückmeldungsmodul zum Bereitstellen einer Vielzahl von Typen von Rückmeldungen an einen Benutzer des tragbaren elektronischen Geräts verfügt, das dynamische Rückmeldungsmodul umfassend Mittel (930) zum Steuern des Widerstands gegen die Rotations- und Seitwärtsbewegung des Scrollrads, das Verfahren umfassend die folgenden Schritte: Bereitstellen einer vom Benutzer initiierten Eingabe an das tragbare elektronische Gerät über das Scrollrad;
Analysieren der Daten, die mit dem vom Benutzer initiierten Eingabe assoziiert sind;
Entscheiden, ob eine Rückmeldungsreaktion erforderlich ist; und
wenn eine Rückmeldungsreaktion erforderlich ist, das Auswählen eines Rückmeldungstyps
wobei der Rückmeldungstyp eine Rotationsrückmeldung oder eine Linearverlagerungsrückmeldung des Scrollrads umfasst.

15. Verfahren gemäß Anspruch 14, wobei der Rückmeldungstyp ferner ein vorbestimmtes Muster der Rückmeldungsstärke umfasst, wodurch der Benutzer ein vorbestimmtes Muster des Widerstands gegen die vom Benutzer initiierte Eingabe erlebt.

16. Verfahren gemäß Anspruch 14 oder 15, wobei die Entscheidung zur Initiierung einer Rückmeldungsreaktion auf einem Rückmeldungsauslöser basiert, der mit einer bestimmten Datenseite assoziiert ist.

17. Verfahren gemäß einem der Ansprüche 14 bis 16, wobei der Rückmeldungstyp auf der Basis des Rückmeldungsauslösers bestimmt wird, der mit bestimmten Daten assoziiert ist.

18. Verfahren gemäß Anspruch 17, wobei der Rückmeldungstyp auf einem Set an vorbestimmten Kriterien basiert.

19. Verfahren gemäß Anspruch 18, wobei die vorbestimmten Kriterien auf Voreinstellungen basieren, die durch den Benutzer ausgewählt wurden.

20. Verfahren gemäß Anspruch 19, wobei die vorbestimmten Kriterien in einem Software-Algorithmus eingerichtet werden.

21. Verfahren gemäß Anspruch 20, wobei die vorbestimmten Kriterien auf einer Position eines Cursors (411) basieren, der durch das Scrollrad gesteuert wird.

22. Verfahren gemäß einem der Ansprüche 14 bis 21, wobei der Rückmeldungsmodus mit einem Rückmeldungstyp assoziiert ist.

23. Verfahren gemäß den Ansprüchen 14 oder 15, wobei der Rückmeldungstyp als Reaktion auf unterschiedliche Prioritätsstufen von Daten ausgewählt wird.

24. Verfahren gemäß den Ansprüchen 14 oder 15, wobei die Seitwärtsbewegung des Scrollrads in einer Richtung weg vom Benutzer erfolgt, wenn der Benutzer zur Dateneingabe in der Lage ist.

25. Verfahren gemäß einem der Ansprüche 14 bis 24, wobei der Widerstand gegen die Rotationsbewegung des Scrollrads absolut ist und sich das Scrollrad nicht drehen kann.

26. Maschinenlesbares Medium, umfassend Programmcode, der auf einem Gerät gemäß Anspruch 12 oder Anspruch 13 ausführbar ist, um das Verfahren gemäß einem der Ansprüche 14 bis 25 zu implementieren.

## Revendications

1. Système de rétroaction dynamique à utiliser sur un dispositif électronique portable (100), le système de rétroaction dynamique comprenant :
une molette (120) permettant la saisie sur le dispositif électronique portable ;
un module de rétroaction dynamique connecté à la molette afin de fournir une pluralité de types de rétroaction à un utilisateur du dispositif électronique portable, le module de rétroaction dynamique comprenant :
des moyens (720, 820) pour fournir une rétroaction en déplaçant la molette dans un sens rotatif et
des moyens (930) pour fournir une rétroaction en déplaçant la molette dans un
sens linéaire ;
un module logiciel permettant de sélectionner un type de rétroaction parmi une pluralité de types de rétroaction, chaque type de rétroaction comprenant au moins une rétroaction dans un sens rotatif ou une rétroaction dans un sens linéaire, et
l'activation du type de rétroaction associé fourni par le module de rétroaction dynamique.

2. Système de rétroaction dynamique selon la revendication 1, dans lequel chaque type de rétroaction comprend en outre un mode prédéfini de force de rétroaction, selon lequel l'utilisateur rencontre un mode prédéfini de résistance à la saisie de l'utilisateur.

3. Système de rétroaction dynamique selon la revendication 1 ou 2, dans lequel le module logiciel sélectionne le type de rétroaction en fonction des données de rétroaction associées à une page de données sur le dispositif électronique portable.

4. Système de rétroaction dynamique selon la revendication 1 ou 2, dans lequel le module logiciel sélectionne le type de rétroaction en fonction d'un ensemble de critères prédéfinis.

5. Système de rétroaction dynamique selon la revendication 4, dans lequel les critères prédéfinis sont basés sur des préférences sélectionnées par l'utilisateur.

6. Système de rétroaction dynamique selon la revendication 4, dans lequel les critères prédéfinis sont établis dans un algorithme logiciel.

7. Système de rétroaction dynamique selon la revendication 6, dans lequel les critères prédéfinis sont basés sur une position d'un curseur (411) commandé par la molette.

8. Système de rétroaction dynamique selon la revendication 1 ou 2, dans lequel la dynamique sélectionne le type de rétroaction en fonction de différents niveaux de priorité de données.

9. Système de rétroaction dynamique selon la revendication 1 ou 2, dans lequel les moyens permettant la résistance à un mouvement rotatif de la molette comprennent un moteur électromagnétique (820) ou au moins un plateau d'embrayage mécanique (720, 721).

10. Système de rétroaction dynamique selon l'une quelconque des revendications 1 à 9, dans lequel le module de rétroaction dynamique permet, comme rétroaction, un mouvement latéral de la molette dans la direction opposée à l'utilisateur lorsque l'utilisateur est en mesure de saisir des données.

11. Système de rétroaction dynamique selon la revendication 1 ou 2, dans lequel les moyens permettant le mouvement latéral de la molette comprennent un mécanisme à came (930) ou un commutateur électromécanique.

12. Dispositif électronique portable (100) comprenant un système de rétroaction dynamique selon l'une quelconque des revendications 1 à 11.

13. Dispositif portable selon la revendication 12 comprenant en outre un clavier (130) et/ou un écran tactile.

14. Procédé permettant une rétroaction sur un dispositif électronique portable (100) présentant une molette (120) et un module de rétroaction dynamique connecté à la molette afin de fournir une pluralité de types de rétroaction à un utilisateur du dispositif électronique portable, le module de rétroaction dynamique comprenant des moyens (930) pour commander la résistance au mouvement rotatif et latéral de la molette, le procédé comprenant les étapes suivantes :
saisie par l'utilisateur sur le dispositif électronique portable par l'intermédiaire de la molette ;
analyse des données associées à la saisie de l'utilisateur ;
prise de décision quant à la nécessité de répondre par une rétroaction ; et si une réponse par rétroaction est nécessaire, sélection d'un type de rétroaction dans lequel le type de rétroaction comprend une rétroaction dans un sens rotatif ou une rétroaction dans un sens linéaire sur la molette.

15. Procédé selon la revendication 14, dans lequel le type de rétroaction comprend en outre un mode prédéfini de force de rétroaction, selon lequel l'utilisateur rencontre un mode prédéfini de résistance à la saisie de l'utilisateur.

16. Procédé selon la revendication 14 ou 15, dans lequel la décision de répondre par rétroaction est basée sur un déclencheur de rétroaction associé à une certaine page de données.

17. Procédé selon l'une quelconque des revendications 14 à 16, dans lequel le type de rétroaction est défini en fonction du déclencheur de rétroaction associé à certaines données.

18. Procédé selon la revendication 17, dans lequel le type de rétroaction est basé sur un ensemble de critères prédéfinis.

19. Procédé selon la revendication 18, dans lequel les critères prédéfinis sont basés sur des préférences sélectionnées par l'utilisateur.

20. Procédé selon la revendication 19, dans lequel les critères prédéfinis sont établis dans un algorithme logiciel.

21. Procédé selon la revendication 20, dans lequel les critères prédéfinis sont basés sur une position d'un curseur (411) commandé par la molette.

22. Procédé selon l'une quelconque des revendications 14 à 21, dans lequel le mode de rétroaction est associé à un type de rétroaction.

23. Procédé selon la revendication 14 ou 15, dans lequel le type de rétroaction est sélectionné en fonction de différents niveaux de priorité de données.

24. Procédé selon la revendication 14 ou 15, dans lequel le mouvement latéral de la molette se fait dans la direction opposée à l'utilisateur lorsque l'utilisateur est en mesure de saisir des données.

25. Procédé selon l'une quelconque des revendications 14 à 24, dans lequel la résistance au mouvement rotatif de la molette est absolue et la molette ne peut pas tourner.

26. Support lisible en machine comprenant un code de programme pouvant être exécuté sur un dispositif de la revendication 12 ou 13 pour permettre la mise en oeuvre du procédé selon l'une quelconque des revendications 14 à 25.
